(19) Europäisches Patentamt / European Patent Office / Office européen des brevets

(11) **EP 3 339 889 A1**

(12) **EUROPEAN PATENT APPLICATION**

(43) Date of publication:
**27.06.2018 Bulletin 2018/26**

(51) Int Cl.:
**G01S 7/486** (2006.01)    **G01S 17/10** (2006.01)
**G01S 7/487** (2006.01)

(21) Application number: **16206494.3**

(22) Date of filing: **22.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ID Quantique S.A.**
**1227 Carouge (CH)**

(72) Inventors:
• **Bussières, Félix**
  **1234 Vessy (CH)**
• **Sanguinetti, Bruno**
  **1203 Genève (CH)**

(74) Representative: **Stolmár & Partner Intellectual Property GmbH**
**rue du Cendrier 15**
**CP 1489**
**1201 Genève (CH)**

(54) **DISTANCE MEASURING DEVICE AND METHOD**

(57) The present invention relates to a distance measuring device (1000, 2000) comprising: light emitting means (1100) configured to emit a first light pulse (P) at a first emission time (T1), a plurality of single-photon detectors (1210, 1220, 3210-3290) configured to detect a reflection (R) of the first light pulse (P), and a controller (1300), connected to the light emitting means (1100) and to the single-photon detectors (1210, 1220, 3210-3290), configured to measure a time interval between the first emission time (T1) and a first detection time (T2, T3), wherein the first detection time (T2, T3) is based on a time at which at least N, where N is equal to or higher than 2, of the plurality of single-photon detectors (1210, 1220, 3210-3290) detect a photon within a first predetermined time interval ($\Delta$T4).

*Fig. 1*

1000

EP 3 339 889 A1

**Description**

The present invention generally relates to a distance measuring device and method. More specifically, the invention relates to a device and method for measuring a distance based on a measurement of a time taken for a light signal to be reflected by an object. Even more specifically, the present invention relates to the use of single-photon detectors in such a distance measuring device and method.

**Prior art**

Devices for measuring the distance of an object based on a flight-time of a light signal are known. In the known devices usually a signal having a predetermined shape is generated by a light emitting means, such as a laser, is then reflected by the object whose distance from the emitter is to be measured, and is measured by a light detector.

Using known methods of signal processing, it is possible to correlate the detected signal with the originally sent signal in order to compute the time interval between the generation and the detection of the signal. Based on the time interval it is then possible to compute the distance from the emitter to the object to be measured.

Those devices however present several disadvantages.

In order to correlate the received signal with the sent signal it is necessary for the received signal to have a signal intensity still recognizable enough to carry out the correlation analysis. This implies that the strength of the received signal must be high enough to overcome ambient noise as well as the losses due to the propagation of the signal from the emitter to the object and back to the detector. In turn, this requires a rather high power from the emitter as the distance to the objects increases.

The use of single-photon detectors for a distance measuring device based on time of flight measurement has been proposed before. Generally, the known devices work by sending one pulse of light and measuring the reflected light. As the single-photon detectors are extremely sensitive, this approach increases the distance which can be measured with a given emitter power, since the amount of light that needs to be measured by the detector can be extremely small. Alternatively, thanks to this approach, it is possible to reduce the emitter's power for a given distance.

However, the high sensitivity of the single-photon detectors also causes those devices to provide several false readings due to ambient light.

A distance measuring device of the prior art is known, for instance, from document US 2009/0273770.

**Object of the invention**

The present invention has therefore been developed with the aim of providing a reliable device and method for measuring the distance to an object, based on a time of flight measurement, employing single-photon detectors, which overcomes at least some of the above-mentioned disadvantages.

In particular, some embodiments of the inventions are directed to a device and/or to a method for measuring the distance to an object, based on single-photon detectors, which can operate even in the presence of background light and/or other sources of noise, without the measurements being corrupted.

**Summary of the invention**

The inventors have generally recognized that, by employing a plurality of single-photon detectors in order to measure the reflected signal, it is possible to filter out noise and/or ambient illumination.

More specifically, the inventors have advantageously realized that, by employing more than one single-photon detector in order to recognize the reflected signal, it is possible to filter out noise and/or light signals due to ambient illumination since the likelihood of noise and ambient illumination causing more than one single-photon detectors to trigger, within a short predetermined time-window, is very low. On the other hand, the likelihood of more than one single-photon detectors to trigger, within a short predetermined time-window, due to the reflected signal, is higher. That is, by only considering as valid signals, namely signals corresponding to the reflection, those signals which trigger more than one single-photon detector within a predetermined short interval, it is advantageously possible to discriminate the reflected signal from the ambient illumination and/or noise, even in the presence of a very low level of the reflected signal.

Such an approach also provides the additional advantage that the distance measurement can be done with a single pulse of light.

In particular, one embodiment of the invention can relate to a distance measuring device comprising: light emitting means configured to emit a first light pulse at a first emission time, a plurality of single-photon detectors configured to detect a reflection of the first light pulse, a controller, connected to the light emitting means and to the single-photon detectors, configured to measure a time interval between the first emission time and a first detection time, wherein the first detection time is based on a time at which at least N, where N is equal to or higher than 2, of the plurality of single-photon detectors detect a photon within a first predetermined time interval.

Thanks to this approach it is advantageously possible to filter all the detection times corresponding to the triggering of a single single-photon detector, or more generally to a number of photodetectors triggering which is lower than N. In this manner it is possible to filter out noise, for instance caused by background light or thermal or electrical noise, which is unlikely to trigger the required at least N single single-photon detectors within the first predetermined time interval.

In some embodiment, the distance measuring device can further comprise a beam splitter, positioned between a direction of provenance of the reflection and the plurality of single-photon detectors, wherein the beam splitter is configured to split the reflection into a plurality of beams, each of the plurality of beams being directed to one of the plurality of single-photon detectors.

Thanks to this approach it is advantageously possible to employ any given number of single-photon detectors, equal to or higher than two, for detecting the same reflection.

In some embodiment, the plurality of single-photon detectors can be arranged substantially next to each other on a single plane.

Thanks to this approach it is advantageously possible to direct the reflection to the plurality of single-photon detectors by simply directing the cone of light generated by the reflection to the area occupied by the plurality of single-photon detectors.

In some embodiment, the first predetermined time interval can be equal to, or larger than, a maximum time interval between two or more output signals of the plurality of single-photon detectors generated by a light beam reaching the plurality of single-photon detectors at the same time.

Thanks to this approach it is advantageously possible to ensure that the triggering of two or more single-photon detectors, which are in fact caused by the same reflection but are detected at different triggering times, for instance due to manufacturing tolerances, are still detected within the predetermined time interval and therefore considered to be substantially coincident in time.

In some embodiment, the first predetermined time interval can be smaller than a minimum time interval between two consecutive light pulses due to ambient illumination, and/or smaller than two triggering events caused by thermal and/or electric noise on the single-photon detectors.

Thanks to this approach it is advantageously possible to ensure that two consecutive triggering events, which are not caused by the reflection but rather by some kind of noise, such as ambient light, thermal noise, or electric noise, can be discarded by the device as not corresponding to the reflection.

In some embodiment, the first predetermined time interval can be comprised between 10 picoseconds and 1 microsecond, preferably between 10 picoseconds and 10 nanoseconds.

Thanks to this approach it is advantageously possible to ensure a small enough value for ruling out most noise-derived events, while still allowing a large enough values for compensating in eventual different triggering times caused by the same reflection event.

Another embodiment of the invention can further relate to a distance measuring device comprising: light emitting means configured to emit a first light pulse at a first emission time, a plurality of single-photon detectors configured to detect a reflection of the first light pulse, a controller, connected to the light emitting means and to the single-photon detectors, configured to measure a time interval between the first emission time and a first detection time, a delay element connected to an input or an output of one of the single-photon detectors and having a predetermined delay value, wherein the first detection time is based on a time at which at least N, where N is equal to or higher than 2, of the plurality of single-photon detectors detect a photon within a first predetermined time interval which is computed by taking into account the predetermined delay value.

Thanks to this approach it is advantageously possible to implement a delay value on at least one of the single-photon detectors. This is advantageous as it allows the controller to receive the triggering signals due to the reflection at slightly different times, even though they are substantially simultaneously reaching the device. In this manner, overloading of the controller can be avoided, particularly in the case of several single-photon detectors, for instance by using different delay elements for each of the single-photon detectors. Moreover, this approach also allows more flexibility in the physical implementation of the device, since it does not require the signal transfer time to be the same on all single-photon detectors, which may not be feasible in practice due to implementation constraints.

Another embodiment of the invention can further relate to a distance measuring method for measuring a distance of an object by means of a plurality of single-photon detectors, the method comprising the steps of: an emission step of emitting a first light pulse at a first emission time, a measuring step comprising measuring a time interval between the first emission time and at least a first detection time, wherein the first detection time is based on a time at which at least two of the plurality of single-photon detectors detect a photon within a first predetermined time interval.

Thanks to this approach it is advantageously possible to filter all the detection times corresponding to the triggering of a single single-photon detector, or to a number of photodetectors triggering which is lower than N. In this manner it is possible to filter out noise, for instance caused by background light or thermal or electrical noise, which is unlikely to trigger the required at least N single single-photon detectors within the first predetermined time interval.

Another embodiment of the invention can further relate to a distance measuring method for measuring a distance of an object by means of a plurality of single-photon detectors, the method comprising: a step of recording a plurality of detection times corresponding to a plurality of times at which a detection signal is received from one of the plurality of single-photon detectors, a measuring step in which, for each group of N values of the plurality of detection times, with N equal to or higher than 2, it is evaluated if the N values of the group are within a first predetermined time interval and, if yes, the distance is computed based on at least one of the N values of detection times of the group.

Thanks to this approach it is advantageously possible to filter all the detection times corresponding to the triggering of a single single-photon detector, or to a number of photodetectors triggering which is lower than N. In this manner it is possible to filter out noise, for instance caused by background light or thermal or electrical noise, which is unlikely to trigger the required at least N single single-photon detectors within the first predetermined time interval.

**Brief description of the drawings**

Figure 1 schematically illustrates a distance measuring device 1000;

Figure 2 schematically illustrates a distance measuring device 2000;

Figure 3 schematically illustrates a plurality of single-photon detectors;

Figure 4 schematically illustrates a timing analysis of a light pulse P emitted by the distance measuring device 1000 or 2000 as well as the respective reflection R in an environment comprising ambient light causing noise N;

Figure 5 schematically illustrates a timing analysis of the behavior of the distance measuring device 1000 or 2000 in the environment schematically illustrated by figure 4;

Figure 6 schematically illustrates a distance measuring method 6000;

Figure 7 schematically illustrates a distance measuring method 7000;

Figure 8 schematically illustrates simulation results comparing the reliability level of one embodiment of the invention to the prior art.

**Detailed description**

In the following, preferred embodiments of the present invention will be described in detail with reference to the drawings. The following embodiments are provided only for illustrative purposes so that those skilled in the art can fully understand the present invention. Therefore, the present invention is not to be limited by the following embodiments but may be implemented in other forms, as defined by the claims.

In the drawings and in the description, equal reference numerals refer to equal elements. It will be understood that, in the drawings, the width, length and thicknesses of some elements may by exaggerated for convenience of illustration and ease of understanding.

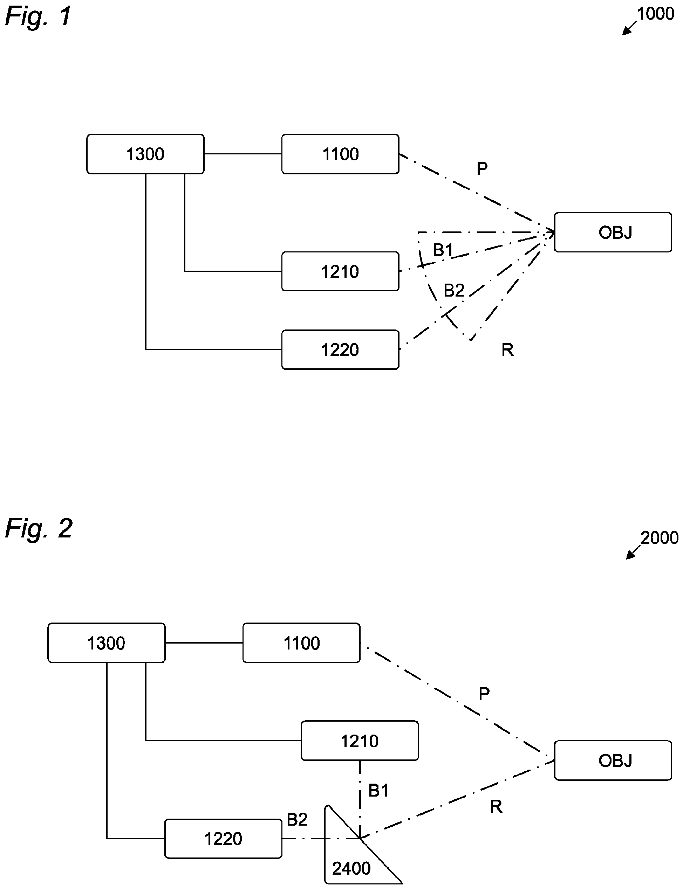

Figure 1 schematically illustrates a distance measuring device 1000 according to an embodiment of the invention.

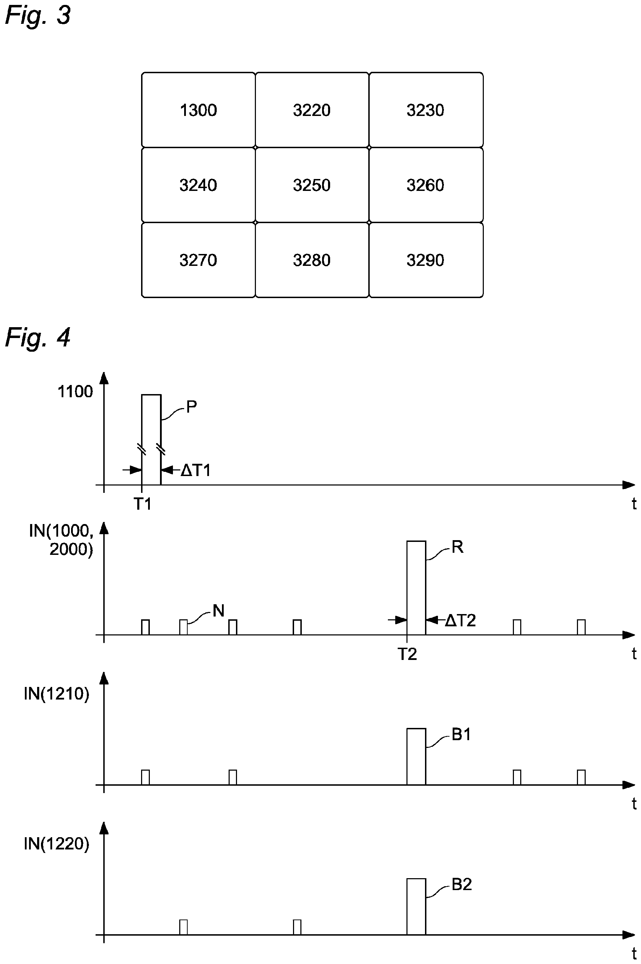

The device 1000 comprises light emitting means 1100 configured to emit a first light pulse P at a first emission time T1. The light emitting means 1100 could be implemented, for instance, by a pulsed laser. As schematically illustrated in figure 4, in some embodiments, the pulse P may have a duration $\Delta T1$ typically in the range from few tens of femtoseconds to a maximum width, which is related to the distance resolution. Such values can be particularly advantageous since they can ensure, as will be described in the following, that a substantial number of photons is reflected and can reach the device 1000 again, in particular in a number higher than the background illumination, for a given measuring time.

The device 1000 further comprises a plurality of single-photon detectors 1210, 1220, configured to detect a reflection R of the first light pulse P. Here, only two single-photon detectors 1210 and 1220 have been illustrated. However, the invention is not limited thereto and can be implemented with any number N of single-photon detectors 1210, 1220, equal to or higher than two. The single-photon detectors 1210, 1220 can be implemented, for instance, by Silicon-based or InGaAs Single Photon Detectors or Superconducting Nanowire Single Photon Detectors.

The device 1000 further comprises a controller 1300, connected to the light emitting means 1100 and to the single-photon detectors 1210, 1220, configured to measure a time interval between the first emission time T1 and a first detection time T2, T3, as will be explained in the following. In general, the controller 1300 can be implemented by a circuit containing a clock and the necessary logic for sending control signals to the light emitting means 1100 and for analyzing the signals outputted by the single-photon detectors 1210, 1220. Also in general, by measuring the time interval between T1, corresponding to the emission of the light pulse P, and T2, T3, corresponding to the detection of the respective reflection R, the controller 1300 can measure the time of flight of the light pulse and therefore compute the distance to the object which reflected the pulse P, in a known manner.

It is the particular approach of the invention, in order to advantageously filter thermal noise and/or electric noise and/or ambient light, to define the first detection time T2, T3 as the time at which at least N, where N is equal to or higher than 2, of the plurality of single-photon detectors 1210, 1220, detect a photon. Even more specifically, the first detection time T2, T3 is the time at which the N single-photon detectors substantially at the same time or, more generally, within a predetermined interval, trigger. That is, the detection by only one single-photon detectors 1210 or 1220 is not considered sufficient for concluding that the detected event corresponds to the reflection R of the pulse P. Instead at least N single-photon detectors 1210, 1220 must detect light for the device to evaluate this event as the measuring of the reflection R. As will be explained in the following, this significantly increases the signal to noise ratio of the device and allows operation with very distant objects, in the range of several kilometers and more, and with emission power which are eye-safe. In general, for a given emission power, this approach allows a much more reliable distance measurement.

It will be clear that, in some cases, some delay may be added to the signal coming from one or more of the plurality of single-photon detectors 1210, 1220. In this case, the controller 1300 can comprise the needed logic for compensating for the additional delay. For instance, if T2 is 100 microseconds and T3 is 101 microseconds, where the predetermined interval is 10 microseconds, the two triggering events can be determined to have happened at substantially the same time, or within the predetermined time interval. However, if the signal T3 is delayed by 20 microseconds, due for instance to a delay line placed in front of the single photon detector 1220, or due to a delay applied to the signal itself, or to the physical configuration of the device 1000, the values of T2=100 microseconds and T3=101+20=121 microseconds will not be within the predetermined first interval of 10 microseconds. In this case, however, since the added delay to T3 is known, the controller 1300 can comprise the needed logic for compensating the presence of the known delay on any of the single photon detectors 1210, 1220. Namely, when a delay is added to the input and/or to the output of one or more of the single photon detectors 1210, 1220, this delay can then by subtracted by the controller 1300 when comparing T2 and T3, or more generally, when comparing the triggering time of the N signals from the single photon detectors 1210, 1220.

Alternatively, the predetermined time interval ΔT4 can be computed based on the known added delay. So, for instance with reference to the same numerical example, instead of checking if T2 and T3 are separated by a time interval ΔT4 between 0 and 10 microseconds, it will be possible to check if they are separated by the time interval ΔT4 plus the known delay, namely by a time interval ΔT4 between 20 and 30 microseconds.

Still in other words, a distance measuring device according to an embodiment of the invention could comprise light emitting means 1100 configured to emit a first light pulse P at a first emission time T1, a plurality of single-photon detectors 1210, 1220 configured to detect a reflection R of the first light pulse P, and a controller 1300, connected to the light emitting means 1100 and to the single-photon detectors 1210, 1220 and configured to measure a time interval between the first emission time T1 and a first detection time T2, T3. In the case in which a known delay is applied to one of the first detection time T2, T3, for instance by inserting a delay in the input or output of the respective single photon detectors 1210, 1220, the controller 1300 can be adapted to:

- subtract the known delay from the delayed signal when comparing the first detection time T2, T3 and examining whether the difference T3-T2 is within ΔT4 as described,

- add the known delay to the non-delayed signal when comparing the first detection time T2, T3 and examining whether the difference T3-T2 is within ΔT4 as described,

- evaluate whether T3-T2 is within the an interval comprised between the known delay and the known delay plus ΔT4.

It will be clear that the above examples describing the situation in which a delay is added substantially use the same inventive concept previously describe and only carry out the necessary mathematical compensation for the known added delay. Therefore they are considered to also implement embodiments of the invention.

Turning back to the simpler case, in which no delay is added on purpose, in a first approximation, the first detection time T2, T3 can be considered the time at which at least N single-photon detectors trigger at the same time. In this respect, the controller 1300 operates as an evaluation unit, evaluating if the N single-photon detectors trigger at the same time. If so, the time at which the N single-photon detectors trigger is considered to be the first determination time for computing the distance.

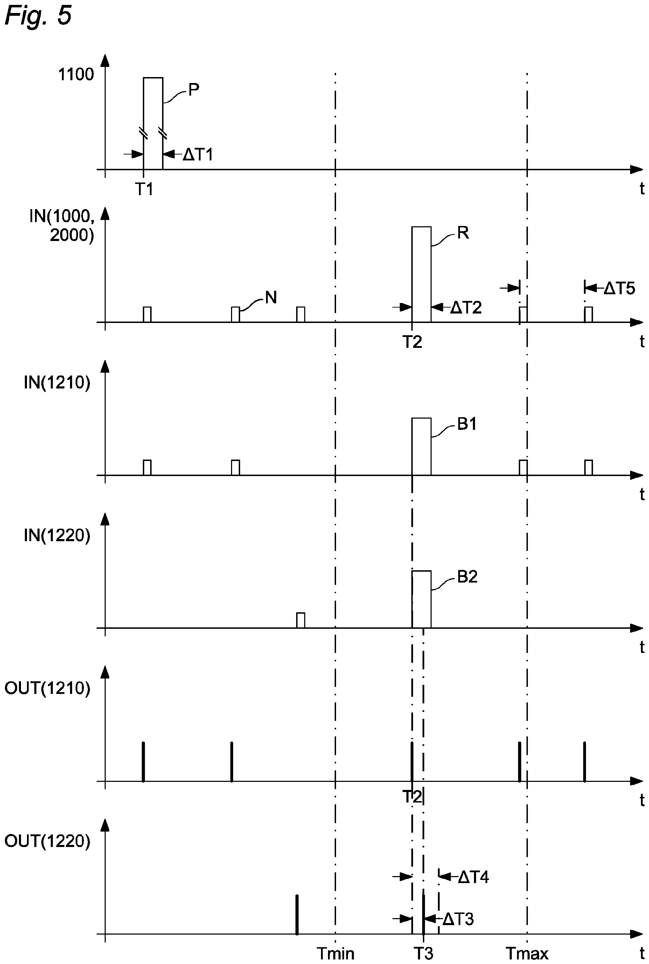

In several cases, however, even with a single event acting substantially simultaneously on the single-photon detectors, the N single-photon detectors may not trigger exactly at the same instant, resulting in two or more different first detection times T2, T3. In some embodiments of the invention it will therefore be considered that the first detection times T2, T3 are substantially simultaneous when they are within a first predetermined time interval ΔT4. That is, when the time difference between the first detection times T2, T3 is less than the first predetermined time interval ΔT4. This will be described in more details in the following, with reference in particular to figure 5. In case of more than two first detection times T2, T3... TN+1 are required for considering the signal as a valid reflection R, the same requirement will be applied to the N first detection times T2, T3 ... TN+1. Namely, the N signals will be required to indicate that N single photon detectors triggered within the first predetermined time interval ΔT4.

Thanks to the plurality of single-photon detectors 1210, 1220, on which the reflection R is measured, the present invention therefore achieves the advantage of a more reliable measurement. In particular, by requiring that more than one single-photon detector triggers substantially simultaneously, namely within time interval ΔT4, false measurements due to noise and/or background light can be avoided.

There are several ways for physically placing the single-photon detectors 1210, 1220, such that they will all be on the path of the reflection R. In figure 1, the single-photon detectors 1210, 1220 are only schematically represented as being placed within the cone of reflection R, comprising beams B1 and B2 respectively hitting the single-photon detectors 1210 and 1220. In this illustrative embodiment, by placing the single-photon detectors 1210, 1220, substantially next to each other such that they can both be within the reflection cone R, it can be ensured they will both react to the reflection R. The cone of the reflection R can be directly generated by the object OBJ, it can be generated by a lens, or it can be generated in any known manner.

Figure 3 illustrates a similar approach, in which a plurality of single-photon detectors 3210-3290 is arranged substantially next to each other on a single plane, preferably substantially in a matrix shape. Also in this case, the size of the reflection cone R may be enough to cover the area occupied by the single-photon detectors 3210-3290. In this manner, when the reflection R reaches the single-photon detectors 3210-3290, more than one detector will trigger, thereby allowing the device to recognize the reflection R from noise or background illumination.

Alternatively, both for the embodiment of figure 1 and 3, each of the single-photon detectors 1210, 1220, 3210-3290 could be connected, for instance by a respective optical fiber, to a pick-up device of the reflection, such as a lens or a telescope, not illustrated.

The embodiment illustrated in figure 3, or in general any embodiment in which more than two single-photon detectors is used, is particularly advantageous. In fact, for some technologies, each single-photon detectors 3210-3290 has a certain efficiency in detecting the reflection R, which can be, for instance, in the range of 20% to 80% This implies that, when using such technologies, if only two single-photon detectors 1210, 1220 are used as in figure 1, it may not be always be the case that at least two detectors trigger when the reflection R reaches the device 1000. By increasing the number of detectors, the probability of at least N single-photon detectors 3210-3290 triggering increases, thereby also increasing the chances of detecting the arrival time of the reflection R. It will be clear that this also applies to cases in which the plurality of single-photon detectors 3210-3290 are not necessarily arranged in a matrix shape. In general it will be sufficient to design an optical system which allows the plurality of single-photon detectors 3210-3290 to be reached by the reflection R, or a part thereof.

In some embodiments, the number of single-photon detectors used can be at least 3, preferably at least 5, even more preferably at least 7. Moreover, in some embodiments, the number N of single-photon detectors which will be required to trigger at the same time for determining the time of the reflection can be at least 2, preferably at least 4, even more preferably at least 6.

Figure 2 illustrates an alternative approach for the implementation of several single-photon detectors 1210, 1220. In particular, the distance measuring device 2000 differs from the device 1000 by further comprising a beam splitter 2400, positioned between a direction of provenance of the reflection R and the plurality of single-photon detectors 1210, 1220. In this case, the beam splitter 2400 is therefore configured to split the reflection beam R into a plurality of beams B1, B2, where each of the plurality of beams B1, B2 is directed to one of the plurality of single-photon detectors 1210, 1220. Also in this case, a lens or a telescope could be placed between the reflection T and the beam splitter 2400, so as to focus the reflection R on the beam splitter 2400.

This embodiment is particularly advantageous as it allows more flexibility in the positioning of the single-photon detectors 1210, 1220, which do not need to physically be in the cone of light generated by the reflection. Moreover, by cascading a plurality of beam splitters 2400, it is possible to implement any given number of single-photon detectors 1210, 1220. Still further, the embodiment advantageously operates also in those cases where the dimension of the cone of the reflection R is not large enough to cover a surface with several single-photon detectors 1210, 1220 or 3210-3290.

It will be clear to those skilled in the art that, although a semitransparent beam splitter 2400 has been schematically illustrated, the invention is not limited to this specific implementation. Alternatively, or in addition, an optical fiber with at least one input and several output can also be considered as a beam splitter. More in general, any component that can derive a plurality of beams B1, B2 from a single reflection beam R, such as, for instance, a lens, can be used.

As described above, the invention is based on the concept that the reflection R is powerful enough to trigger at least N single-photon detectors 1210, 1220 substantially simultaneously, while the noise and/or background illumination cannot achieve this result. As the single-photon detectors 1210, 1220 will necessarily trigger at slightly different times, due to manufacturing tolerances, the invention can be implemented without necessarily requiring the at least N single-photon detectors 1210, 1220 to trigger exactly at the same time. Instead, it will be sufficient for them to trigger within a first predetermined time interval ΔT4.

In general, the first predetermined time interval ΔT4 is chosen long enough so as to accommodate for the slightly different reaction times of the single-photon detectors 1210, 1220, but also short enough so as to guarantee that the triggering of at least N single-photon detectors 1210, 1220, within the first predetermined time interval ΔT4 is unlikely to happen due to noise or background illumination.

That is, in some embodiments, the first predetermined time interval ΔT4 is equal to, or larger than, a maximum time interval ΔT3 between two or more output signals of the plurality of single-photon detectors 1210, 1220, 3210-3290 generated by a light beam B1, B2, reaching the plurality of single-photon detectors 1210, 1220, 3210-3290 at the same time. In other words, if two or more of the single-photon detectors 1210, 1220, 3210-3290 are hit by a single reflection beam R, or the beams B1, B2, derived from it, they will trigger and output a detection signal at slightly different times. By referring to the specifications of the single-photon detectors 1210, 1220, 3210-3290, and/or by calibrating the device 1000, 2000, the maximum difference in triggering time between the at least N single-photon detectors 1210, 1220, 3210-3290 can be computed or measured, and is here referred to as ΔT3. By choosing the first predetermined time interval ΔT4 is equal to, or larger than, ΔT3 it can be ensured that the device 1000, 2000 will still recognize two or more triggering events as being substantially simultaneous, even in those cases where they are spaced by a slight difference ΔT3. In practical applications, the value of ΔT3 can be typically 10 picoseconds and, in some cases, up to 1 microsecond, preferably between 10 picoseconds and 10 nanoseconds.

Moreover, in some embodiments, the first predetermined time interval ΔT4 can be selected to be smaller than a minimum time interval ΔT5 between two consecutive light pulses due to ambient illumination, and/or smaller than two triggering events caused by thermal and/or electric noise on the single-photon detectors. This provides the additional advantage that it is possible to avoid two or more triggering events, due to ambient illumination and/or thermal and/or electric noise to be recognized as being substantially simultaneous, such that they would be interpreted as being the reflection R.

In some embodiments, it will be possible to let the device 1000, 2000 measure the ambient illumination for a given time, so as to evaluate the value of ΔT5. This provides the beneficial advantage that the device can adapt its operation to different operating conditions. Moreover, this solution does not require any additional components in order to be implemented, as the circuitry for measuring ΔT5 is already comprised in the controller 1300. In practical applications photons due to noise are randomly distributed. The value of ΔT5 can therefore be measured with a short measurement of the ambient light.

Figure 4 schematically illustrates an exemplary timing analysis of a light pulse P emitted by the distance measuring device 1000 or 2000 as well as the respective reflection R in an environment comprising ambient light causing noise N. In figure 4, the X axis represents time while the Y axis represents the number of photons. It will be clear that the graphs are not necessarily drawn to scale to allow a better visual understanding of the invention.

As can be seen in figure 4, the pulse P is emitted by the light emitting means 1100 at a time T1 and with the characteristics described above. The time T1 can then be considered as a reference time for the current distance measure. As input to the device 1000 or 2000, as illustrated in the second graph from the top of figure 4, it is possible to recognize several events caused by background illumination identified by N. Additionally, the reflection R of the pulse P can be seen. The reflection R will reach the device 1000, 2000 at a time T2 depending on the distance of the object OBJ from the device 1000, 2000. The reflection R will have a duration ΔT2 which will depend on the duration ΔT1 of the pulse P, the flight-time and the characteristics of the propagation medium. This duration ΔT2 also contributes to the slight difference in the triggering time of the at least N single-photon detectors 1210, 1220, 3210-3290.

The bottom two graphs of figure 4 schematically illustrate the repartition of the pulses at the input of the device 1000, 2000 on the single-photon detectors 1210, 1220, 3210-3290, in the case where the device 1000, 2000 has two single-photon detectors 1210, 1220, 3210-3290. As can be seen, the sum of the light beams on the two single-photon detectors 1210, 1220, corresponds to the beams entering the device 1000, 2000. However, the noise N, or the background illumination, has a power per unit of time much smaller than the reflection R. That is, the number of photons caused by ambient illumination N per second is much smaller than the number of photons caused by the reflection R. In particular, the photons illustrated in the figures corresponding to the noise N are each time one single photon, while the number of photons corresponding to the reflection R is higher, such as for instance three photons or more, preferably more than five, even more preferably more than ten.

This results in the advantageous effect that the photons due to the noise N will be either reaching the detector 1210 or 1220, but not both of them. On the other hand, the plurality of photons corresponding to the reflection R will be substantially equally split among the detector 1210 and 1220, as illustrated.

In some embodiments, it is sufficient that the number of photons resulting from the reflection R is higher than the number of photons, in a given time interval $\Delta T4$, resulting from the ambient light. For instance, the noise N may capable of generating more than one photon in the time interval $\Delta T4$, so that two single-photon detectors may trigger within interval $\Delta T4$ both for the noise N and the reflection R. In such embodiments, the controller 1300 may be configured to recognize that the two single-photon detectors trigger within interval $\Delta T4$ more than once, thereby concluding the presence of a noise N high enough to trigger at least two single-photon detectors. In this case, the controller 1300 may increase, in some embodiments, the requirement of the minimum number of single-photon detectors that have to trigger within interval $\Delta T4$. The increase may be done gradually, for instance by one single-photon detector at the time, as long as only one multiple detection event of the plurality of single-photon detectors is measured by the controller 1300 within interval $\Delta T4$. In this manner, the device can advantageously adapt its operation to different level of noise N.

Figure 5 schematically illustrates a timing analysis of the behavior of the distance measuring device 1000 or 2000 in the environment schematically illustrated by figure 4. The first four graphs from the top correspond to those of figure 4. The bottom two graphs correspond, from the top, to the output signals of the single-photon detectors 1210, 1220. In the latter two graphs, the output signal is schematically represented by a short time signal. It will be clear to those skilled in the art that this is for practical illustrations only and it does not necessarily imply that the output signal of the single-photon detectors 1210, 1220 must have the illustrated shape.

As can be seen in figure 5, the noise N caused by background illumination causes a triggering event only on one of the two single-photon detectors 1210, 1220 at any given time, but not on both, so it is not recognized by the device 1000, 2000 as the reflection R. On the contrary, since the number of photons corresponding to the reflection R is higher, they will cause a triggering even on both single-photon detectors 1210, 1220, thereby allowing the device 1000, 2000, to recognize the reflection R from the noise N. Also in those cases where two noise photons are close in time and are detected by two single-photon detectors 1210, 1220, the even can be filtered out by setting a value of $\Delta T4$ smaller than $\Delta T5$, as previously described.

It will be clear that, although here the ambient light is illustrated as the only cause of noise N, other kinds of noise may result in the triggering of one or more of the single-photon detectors, such as thermal of electrical noise.

As illustrated in figure 5, even though the reflection R reaches the device 1000, 2000, at time T2, it could happen that the single-photon detectors 1210, 1220 do not detect it both at the same time. In the illustrated example, for instance, the single-photon detectors 1210 detects the reflection R at T2 while the single-photon detector 1220 detects it at T3, which differs from T2 by a value $\Delta T3$. Different factors contribute to this difference, including for instance manufacturing tolerances, single-photon detector jitter, different optical path length and possibly a non-completely symmetrical subdivision of the reflection R on the two single-photon detectors 1210, 1220.

In most practical application, the value $\Delta T3$ is small enough to be considered negligible, in particular with respect to the difference between T1 and T2. Said otherwise, in those cases, it is not important whether the distance computation is made on the basis of T2 or T3, as the result is substantially the same. A typical value for $\Delta T3$ can be, for instance, between 10 picoseconds and 1 microsecond, preferably between 10 picoseconds and 10 nanoseconds. The higher value of 1 microsecond corresponds to a maximum distance error of approximately 30m, which may be acceptable in several applications.

When not acceptable, the difference $\Delta T3$ can be minimized by tuning the single-photon detectors. In some embodiments, several measurements can be made in order to measure the average difference between T2 and T3 and the average difference can be subtracted to the slowest measurement, for instance T3 in the illustrated case, so that the distance measurement uncertainty can be reduced. Alternatively, or in addition, the average value of T2 and T3 can be used. Still alternatively the earliest value of triggering times T2, T3 of the single-photon detectors can be used for computing the distance, while the second, or multiple, triggering times within the interval $\Delta T4$ are only checked by the controller 1300 for confirming that the received signal corresponds to the reflection R and not to the noise N. Namely, if after T2 there is a N-1 number of trigger events on different single-photon counters within the interval $\Delta T4$, the controller may conclude that the event recorded at T2 is the reflection and may compute the distance based on T2-T1.

Figure 5 further illustrates another feature of some embodiments of the invention, which can also be used to advantageously filter out the noise N.

In particular, as indicated in the figure, a minimum time Tmin and a maximum time Tmax can be defined. The triggering events prior to Tmin and/or subsequent to Tmax can then be disregarded as not possibly corresponding to the reflection R. This significantly lowers the amount of data to be analyzed by the device 1000, 2000. It will be clear to those skilled in the art that the values of Tmin and Tmax can be computed based on the expected distance of the object. That if, for instance, by preselecting a minimum and maximum expected distance for the object, a respective theoretical value of Tmin and Tmax can be computed, since the speed of the pulse P in the propagation medium is known.

Said otherwise, assuming a distance D to the object which would result in an expected time T, the values of T2, T3 which are

higher than TMax = T + predetermined_time1

and/or lower than Tmin = T - predetermined_time2

can be discarded. In this case, the predetermined_time1 and predetermined_time2 can be equal or different. The values can be set high enough to guarantee for the error in estimating the distance D, and therefore the time T.

In an exemplary numerical value, assuming:

- an object whose distance D from the device 1000, 2000 is assumed to be 30km +/- 3km,

- the propagation time T roundtrip is expected to be roughly 200 microseconds +/- 20 microsecond if, for instance, in free-space such as air or vacuum,

in order to reduce the number of measurement points by the device 1000, 2000, the value of Tmax can be set at 220 microseconds while the value of Tmin can be set at 180 microseconds.

Thanks to this approach, the likelihood of measuring a multiple triggering event on a plurality of single-photon detectors is also further advantageously reduced, thereby reducing the likelihood of false positive measurements.

Still in the numerical example above the value of $\Delta T3$ can be roughly 10 picoseconds. If the value of the earliest triggering event, in the example T2, is used for measuring the distance, there is no error in computing the distance to the object. Even if the value of T3 were to be used, the distance would still be estimated with a precision of approximately 3cm, which may be acceptable for most measurement. In this case, the value of $\Delta T4$ can be selected to be at least equal to or higher than $\Delta T3$. A practical value for $\Delta T4$ can be in the range of 1 nanosecond or more. In some embodiments, a value of $\Delta T4$ can be selected to be a predetermined number of times larger than $\Delta T3$, for instance 2, preferably 5, even more preferably 10.

In some embodiments, $\Delta T4$ may be defined as:

$$\Delta T4 \leq Max\{10 \times \Delta T2; 10 \times Max(Jitter_{(1210,1220)})\}$$

Alternatively, or in addition, in some embodiments, $\Delta T4$ may be defined as:

$$\Delta T4 \leq \frac{1}{Max_{DCR(1210,1220)}}$$

DCR being the Single Photon Detector Dark Count Rate or noise due to false detections.

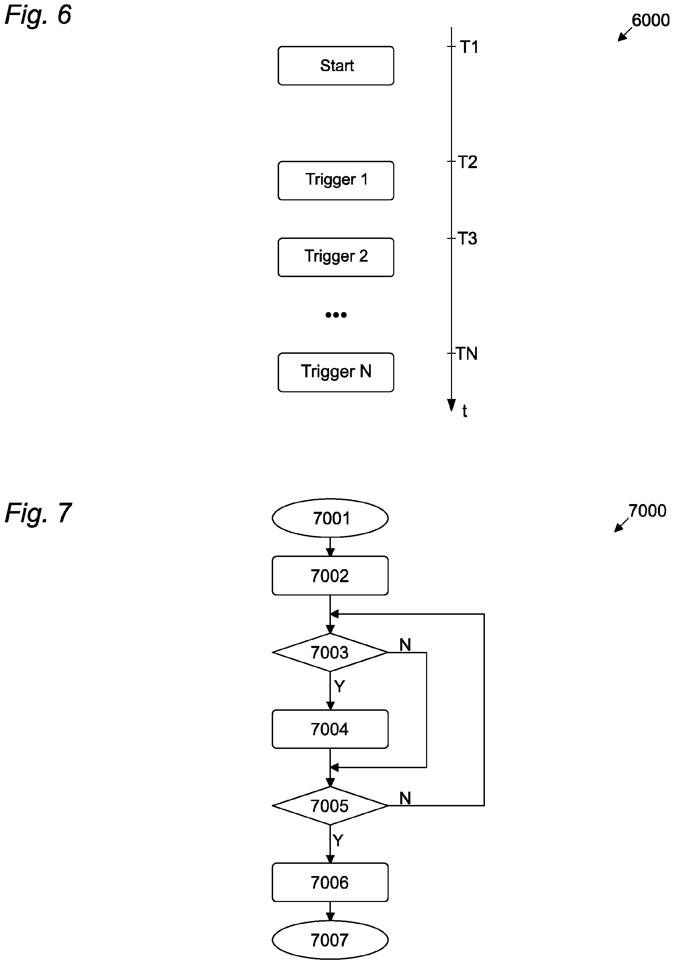

Figure 6 schematically illustrates a distance measuring method 6000 according to a further embodiment of the invention. In some embodiments, the method 6000 can be carried out by any of devices 1000, 2000.

In particular, the distance measuring method 6000 allows measuring a distance of an object OBJ by means of a plurality of single-photon detectors 1210, 1220, 3210-3290 and comprises the steps of starting the method by an emission step of emitting a first light pulse P at a first emission time T1. The time T1 is considered as a reference time for the computation of the distance and, when implemented, for the calculation of Tmin and Tmax.

The method further comprises a measuring step of measuring a time interval between the first emission time T1 and a first detection time T2, T3, at which a plurality of N single-photon detectors trigger. In the method, the first detection time T2, T3 is based on a time at which at least N of the plurality of single-photon detectors 1210, 1220, 3210-3290 detect a photon within a first predetermined time interval $\Delta T4$. Said otherwise, in the method, the first detection time, on which the distance to the object is computed, is based on the values of T2 and T3 - and more if more than two detectors are used - which fall within the first predetermined time interval $\Delta T4$ and can therefore be considered to be substantially simultaneous.

As previously described, for the computation of the distance, namely for the selection of the first detection time T2, T3 to be used for computing the distance to the object, the expression "based on" can be interpreted so as to mean that the time of the first triggering event is used. Alternatively, in some embodiments, the average of the times of the N triggering events falling within the predetermined time interval $\Delta T4$ after the first triggering event T2, can be used.

Figure 7 schematically illustrates a distance measuring method 7000 according to a further embodiment of the invention.

In particular, method 7000 allows measuring a distance of an object OBJ by means of a plurality of single-photon detectors 1210, 1220, 3210-3290, The method 7000 as illustrated comprises several steps. Those will be described in the following, so as to provide a detailed description of a possible detailed implementation of the method. If will however be clear to those skilled in the art that several of the steps are not strictly necessary for implementing the invention.

Step 7001 corresponds to a start step of starting, for instance, a clock. The clock could be comprised in the controller 1300. Steps 7002 corresponds an emission step of emitting a first light pulse P at a first emission time T1. The subsequent combination of steps 7003, 7004 and 7005 results in the recording a plurality of N detection times T2, T3, or more, corresponding to each time a detection signal, or a triggering signal, is received from one of the plurality of single-photon detectors 1210, 1220, 3210-3290. Said otherwise, each time any of the single-photon detectors 1210, 1220, 3210-3290 triggers, the respective time is stored, together with the information describing which single-photon detector 1210, 1220, 3210-3290 triggered.

In particular, at step 7003 it is determined if at least one single-photon detector has triggered. If so, at step 7004, the triggering time is recorded. At step 7005 it is determined if the maximum time Tmax has been reached.

At a computing step 7006, for each group of N values of the plurality of detection times T2, T3, TN previously recorded at the step 7003-7004, with N equal to or higher than 2, it is evaluated if the N values of the group are within a first predetermined time interval $\Delta$T4 and, if yes, the distance is computed based on at least one the N values of the group.

That is, all triggering events stored in the recoding steps are evaluated, in groups of N elements so as to identify a group of N triggering events which are separated by a time smaller than $\Delta$T4. Once such group of triggering events is identified, it is checked that the N events belong to N different single-photon detectors 1210, 1220, 3210-3290. In alternative embodiments, such check can also be implemented when combining the triggering events in the groups.

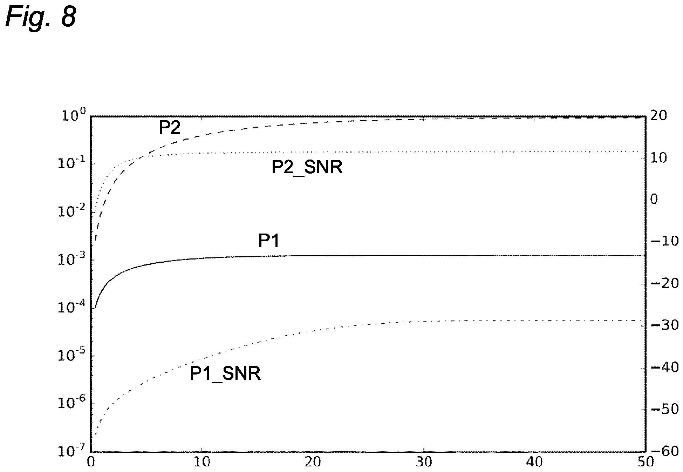

Although some of the above embodiments have been described with reference to a case in which the device or method employs two single-photon detectors 1210, 1220, 3210-3290, the present invention is not limited thereto and any number of single-photon detectors 1210, 1220, 3210-3290 equal to, or higher than, two can be implemented. In general, however, the inventors have determined that the requirement of two substantially simultaneous triggering events is sufficient, in a large number of practical cases, for significantly increasing the reliability of the operation of the invention to a sufficient level. This can, for instance, be confirmed by the simulation results illustrated in figure 8.

In particular, figure 8 schematically illustrates simulation results comparing the reliability level of one exemplary embodiment of the invention, in which two substantially simultaneous triggering events are required for the detection of the reflection R, to the prior art, in which a single triggering event is recognized as the reflection R.

More specifically, figure 8 illustrate on the left Y axis the probability of correctly detecting a reflection R. On the right Y axis, the signal to noise ratio is indicated, in decibel. The x axis indicated the mean number of photons received with the reflection R. Two scenarii are compared, namely P1 based on the prior art, that is based on only one single-photon detector, and P2 based on the invention.

The object OBJ is assumed to be located at a pre-defined distance interval between a minimum and a maximum distance, respectively corresponding to Tmin and Tmax. The efficiency of the single-photon detectors 1210, 1220, 3210-3290 is assumed to be the same $\eta$=0.2. Moreover, the system is subjected to noise N, either from optical origin such as ambient light, or dark counts in the single-photon detectors 1210, 1220, 3210-3290. All sources of noise may be gathered together and specify the dark count rate DCR in Hz of the single-photon detectors 1210, 1220, 3210-3290. That is, if DCR = 1 kHz, then the single-photon detector will click 1000 times per second, on average, only due to the noise N. In the simulation, the value of DCR is set to 10 MHz.

P1 represents the probability to observe a single detection event in the interval from Tmin to Tmax. P1_SNR represents is the ratio between the probability to observe a single detection event over the probability to observe more than one detection. Those values therefore related to the prior art situation. On the other hand, P2 represents the probability to observe a single detection event in the interval from Tmin to Tmax when using the invention. P2_SNR represents is the ratio between the probability to observe a single detection event over the probability to observe more than one detection. Both P1 and P2 are plotted as a function of the mean number of photons per pulse reaching the single-photon detectors 1210, 1220, 3210-3290. In this simulation pulses are assumed to follow Poisson statistics, but any other statistics such as thermal would lead to similar results.

As can be seen, the level of P2_SNR is significantly higher than the level of P1_SNR, confirming that the invention outperforms the prior art in terms of reliability. This, in turn, allows the invention to be much more precise at the same distance, and/or to operate on much longer distances, and/or to operate at a reduced power emission.

Although several embodiments have been separately described above, for clarity of exposition, it will be clear to those skilled in the art that any features of any of the described embodiments can be used in combination of any features of any other of the described embodiments, within the scope of the invention as defined by the claims.

**List of reference numerals**

| | |
|---|---|
| 1000: | distance measuring device |
| 1100: | light emitting means |
| 1210, 1220: | single-photon detectors |
| 1300: | controller |
| 2000: | distance measuring device |
| 2400: | beam splitter |
| 3210-3290: | single-photon detectors |
| 6000: | distance measuring method |
| 7000: | distance measuring method |
| 7001: | clock start |
| 7002: | pulse emission |
| 7003: | signal from one single-photon detector received? |
| 7004: | record time of detection |
| 7005: | maximum time elapsed? |
| 7006: | measuring step |
| 7007: | end |
| B1, B2: | beam |
| N: | noise |
| OBJ: | object |
| P: | light pulse |
| R: | reflection |
| T1: | emission time |
| T2, T3: | detection time |
| Tmin: | minimum time for the reflection |
| Tmax: | maximum time for the reflection |
| $\Delta T1, \Delta T2, \Delta T3, \Delta T4, \Delta T5$: | time interval |

**Claims**

1.  A distance measuring device (1000, 2000) comprising:

    light emitting means (1100) configured to emit a first light pulse (P) at a first emission time (T1),
    a plurality of single-photon detectors (1210, 1220, 3210-3290) configured to detect a reflection (R) of the first light pulse (P),
    a controller (1300), connected to the light emitting means (1100) and to the single-photon detectors (1210, 1220, 3210-3290), configured to measure a time interval between the first emission time (T1) and a first detection time (T2, T3),

    **characterized in that**
    the first detection time (T2, T3) is based on a time at which at least N, where N is equal to or higher than 2, of the plurality of single-photon detectors (1210, 1220, 3210-3290) detect a photon within a first predetermined time interval ($\Delta T4$).

2.  The distance measuring device (2000) according to claim 1,
    further comprising a beam splitter (2400), positioned between a direction of provenance of the reflection (R) and the plurality of single-photon detectors (1210, 1220, 3210-3290),
    wherein the beam splitter (2400) is configured to split the reflection (R) into a plurality of beams (B1, B2), each of the plurality of beams (B1, B2) being directed to one of the plurality of single-photon detectors (1210, 1220, 3210-3290).

3.  The distance measuring device (1000) according to claim 1,
    wherein the plurality of single-photon detectors (1210, 1220, 3210-3290) are arranged substantially next to each other on a single plane.

4. The distance measuring device (1000, 2000) according to any previous claim,
wherein the first predetermined time interval (ΔT4) is equal to, or larger than, a maximum time interval (ΔT3) between two or more output signals of the plurality of single-photon detectors (1210, 1220, 3210-3290) generated by a light beam (B1, B2) reaching the plurality of single-photon detectors (1210, 1220, 3210-3290) at the same time.

5. The distance measuring device (1000, 2000) according to any previous claim,
wherein the first predetermined time interval (ΔT4) is smaller than a minimum time interval (ΔT5) between two consecutive light pulses due to ambient illumination and/or smaller than two triggering events caused by thermal and/or electric noise on the single-photon detectors.

6. The distance measuring device (1000, 2000) according to any previous claim,
wherein the first predetermined time interval (ΔT4) is comprised between 10 picoseconds and 1 microsecond, preferably between 10 picoseconds and 10 nanoseconds.

7. A distance measuring device (1000, 2000) comprising:

light emitting means (1100) configured to emit a first light pulse (P) at a first emission time (T1),
a plurality of single-photon detectors (1210, 1220, 3210-3290) configured to detect a reflection (R) of the first light pulse (P),
a controller (1300), connected to the light emitting means (1100) and to the single-photon detectors (1210, 1220, 3210-3290), configured to measure a time interval between the first emission time (T1) and a first detection time (T2, T3),
a delay element connected to an input or an output of one of the single-photon detectors (1210, 1220, 3210-3290) and having a predetermined delay value,

**characterized in that**
the first detection time (T2, T3) is based on a time at which at least N, where N is equal to or higher than 2, of the plurality of single-photon detectors (1210, 1220, 3210-3290) detect a photon within a first predetermined time interval (ΔT4) which is computed by taking into account the predetermined delay value.

8. A distance measuring method (6000) for measuring a distance of an object (OBJ) by means of a plurality of single-photon detectors (1210, 1220, 3210-3290), the method comprising the steps of:

an emission step (Start) of emitting a first light pulse (P) at a first emission time (T1),
a measuring step (Trigger 1, Trigger 2, Trigger N) comprising measuring a time interval between the first emission time (T1) and at least a first detection time (T2, T3),

wherein the first detection time (T2, T3) is based on a time at which at least N of the plurality of single-photon detectors (1210, 1220, 3210-3290) detect a photon within a first predetermined time interval (ΔT4).

9. A distance measuring method (7000) for measuring a distance of an object (OBJ) by means of a plurality of single-photon detectors (1210, 1220, 3210-3290), the method comprising:

a step of recording (7003, 7005, 70054) a plurality of detection times (T2, T3) corresponding to a plurality of times at which a detection signal is received from one of the plurality of single-photon detectors (1210, 1220, 3210-3290),
a measuring step (7009), in which, for each group of N values of the plurality of detection times (T2, T3), with N equal to or higher than 2, it is evaluated if the N values of the group are within a first predetermined time interval (ΔT4) and, if yes, the distance is computed based on at least one of the N values of detection times (T2, T3) of the group.

Fig. 1

1000

```
┌──────────┐        ┌──────────┐
│   1300   │────────│   1100   │ ─·─·─·─·─·  P
└──────────┘        └──────────┘            ·─·
     │    │                                       ·─·─·─>  ┌──────────┐
     │    │         ┌──────────┐      B1    ·─·─·         │   OBJ    │
     │    └─────────│   1210   │ ·─·─·─·─·─·              └──────────┘
     │              └──────────┘      B2
     │              ┌──────────┐            ·─·─·─·
     └──────────────│   1220   │ ·─·─·─·─·         R
                    └──────────┘
```

Fig. 2

2000

```
┌──────────┐        ┌──────────┐
│   1300   │────────│   1100   │ ─·─·─·─·
└──────────┘        └──────────┘        ·─·─·
   │    │                                   ·─·  P
   │    │         ┌──────────┐                 ·─·─·
   │    └─────────│   1210   │                      ·─·  ┌──────────┐
   │              └──────────┘                           │   OBJ    │
   │                   │ B1                          ·─· └──────────┘
   │              ┌──────────┐  B2  ╱│           ·─·─·  R
   └──────────────│   1220   │ ·─· ╱ │      ·─·─·
                  └──────────┘    ╱  │
                                 ╱2400│
                                ╱─────│
```

Fig. 3

| | | |
|---|---|---|
| 1300 | 3220 | 3230 |
| 3240 | 3250 | 3260 |
| 3270 | 3280 | 3290 |

Fig. 4

1100

P

ΔT1

T1

t

IN(1000, 2000)

R

N

ΔT2

T2

t

IN(1210)

B1

t

IN(1220)

B2

t

*Fig. 5*

*Fig. 6*

6000

Start — T1

Trigger 1 — T2

Trigger 2 — T3

●●●

Trigger N — TN

t

*Fig. 7*

7000

7001

7002

7003 — N

Y

7004

7005 — N

Y

7006

7007

Fig. 8

Europäisches
Patentamt

European
Patent Office

Office européen
des brevets

# EUROPEAN SEARCH REPORT

Application Number

EP 16 20 6494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 605 034 A1 (RIEGL LASER MEASUREMENT SYS [AT]) 19 June 2013 (2013-06-19) * paragraphs [0004], [0006], [0007], [0008], [0034], [0035], [0036], [0042], [0046]; figure 1 * | 1-9 | INV. G01S7/486 G01S17/10 G01S7/487 |
| A | EP 2 887 096 A1 (OULUN YLIOPISTO [FI]) 24 June 2015 (2015-06-24) * paragraph [0036] - paragraph [0040] * | 1,7-9 | |
| A | US 2010/019903 A1 (SAWAYA KAZUYUKI [JP]) 28 January 2010 (2010-01-28) * figure 5 * | 1,7-9 | |

TECHNICAL FIELDS
SEARCHED      (IPC)

G01S

The present search report has been drawn up for all claims

| Place of search | Date of completion of the search | Examiner |
|---|---|---|
| Munich | 20 June 2017 | Beer, Mark |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 6494

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2017

| Patent document cited in search report | | Publication date | Patent family member(s) | | Publication date |
|---|---|---|---|---|---|
| EP 2605034 | A1 | 19-06-2013 | AT | 512154 A4 | 15-06-2013 |
| | | | EP | 2605034 A1 | 19-06-2013 |
| EP 2887096 | A1 | 24-06-2015 | EP | 2887096 A1 | 24-06-2015 |
| | | | US | 2015177369 A1 | 25-06-2015 |
| US 2010019903 | A1 | 28-01-2010 | AU | 2008215714 A1 | 21-08-2008 |
| | | | CN | 101641579 A | 03-02-2010 |
| | | | EP | 2116826 A1 | 11-11-2009 |
| | | | JP | 5590762 B2 | 17-09-2014 |
| | | | JP | 2008197028 A | 28-08-2008 |
| | | | TW | 200837662 A | 16-09-2008 |
| | | | US | 2010019903 A1 | 28-01-2010 |
| | | | WO | 2008099587 A1 | 21-08-2008 |
| | | | ZA | 200905757 B | 28-04-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090273770 A